# EUROPEAN PATENT APPLICATION

(11) **EP 4 094 564 A1**
(43) Date of publication of application: **30.11.2022**
(21) Application number: 22173136.7
(22) Date of filing: 13.05.2022
(51) Int. Cl.: A01D 41/12

(54) **RESIDUE SPREAD MONITORING**

(30) Priority: 19.05.2021 GB 202107132
(71) Applicant: AGCO International GmbH, 8212 Neuhausen am Rheinfall (CH)
(72) Inventor: CHRISTIANSEN, Martin Peter, 8930 Randers (DK); TARRAGONA, Ramon Buchaca, 8930 Randers (DK); LAURSEN, Morten Stigaard, 8930 Randers (DK); DURING JENSEN, Kenneth, DK-8930 Randers NØ (DK); BOJSEN, Thomas Smed, 8900 Randers (DK)
(74) Representative: AGCO Intellectual Property Department

(57) **Abstract**

Systems and methods are provided for monitoring the distribution of residue material from a spreader tool (22) of an agricultural machine (10). This includes receiving image data from an imaging sensor (30) indicative of residue material spread by the spreader tool (22) within a sensing region rearwards of the agricultural machine (10). One or more image transformations are applied to the image data to generate an enhanced image (300, 400, 500) of the residue material distribution. This can include colour, distortion and/or correction transformations for generating an enhanced image for view by an operator of the machine (10) which is easy to interpret. The invention extends to controlling a user interface (32) associated with the agricultural machine (10) to provide an indicator indicative of the enhanced image.

## Description

### TECHNICAL FIELD

The present invention relates, in general, to systems and methods for monitoring residue spread from a harvesting machine.

### BACKGROUND

Agricultural combines work to cut crop material from a field before separating the grain from the material other than grain (MOG) (referred to interchangeably as "residue") on board. Generally, the grain is transferred to a grain bin of the combine (where it may be temporarily stored) and the MOG is deposited back onto the field. A second operation may be performed to gather the deposited MOG, or the MOG may be used as a fertiliser for the soil in the field. In either case, it is important for the MOG to be distributed evenly during deposition, in order to ensure an efficient second harvesting operation (e.g. bailing of the MOG) or to ensure effective fertilisation of the soil. When residue is unevenly distributed over a field, not only are exposed areas at risk for erosion, but inconsistencies in soil temperatures and moisture also may cause uneven plant emergence the following year, hurting yield. Ideally, residue should be spread consistently and managed to promote uniform rapid warming and drying in the spring for earlier planting and sufficient seed germination. It is also important not to spread MOG or residue into standing crop adjacent to the machine - i.e. the crop to be harvested on the next pass by the machine - as spreading into standing crop may result in the same area being spread twice causing an unwanted built of residue in a given area, again leading to uniformity issues.

To control the distribution of the MOG, known combines include spreader tools which can include deflectors / steering vanes, fans or the like which are controllable by an operator of the combine. Generally, this is a manual process and the operator must observe the distribution of the MOG during operation and make any necessary adjustments to the spreader tool manually. The distribution of the MOG can be affected by numerous operating conditions, including wind speed, water content of the material, gradient of the field, etc. Accordingly, observing and adjusting the spreader tool manually can be relatively complex and time consuming, especially where the operating conditions vary across the area to be harvested.

In an attempt to address this problem it is known to utilise sensors, e.g. wind direction sensors, ultrasonic sensors, cameras and the like operable to infer or monitor the distribution of the MOG in real time. In some instances, information relating to the observed distribution may be relayed to the operator of the combine (e.g. through a user interface within the operator cab) who may use this information to adjust operation of the spreader tool. In further solutions, control of the spreader tool has been at least partly automated based on data from such sensors, for example by controlling the direction of one or more steering vanes / deflectors in an attempt to account for wind direction. However, such systems are relatively complex and no complete solution has been realised.

It would be advantageous to improve upon these known systems such that the distribution of material from an agricultural machine can be monitored and optionally controlled more effectively and efficiently.

### SUMMARY OF THE INVENTION

In an aspect of the invention there is provided a system for monitoring the distribution of residue material from a spreader tool of an agricultural machine, the system comprising: an imaging sensor having a sensing region rearwards of the agricultural machine; and one or more controllers, configured to: receive image data from the sensor indicative of residue material spread by the spreader tool within the sensing region; apply one or more image transformations to the image data to generate an enhanced image of the residue material distribution; and output one or more control signals for a user interface associated with the agricultural machine for providing an indicator indicative of the enhanced image.

Advantageously, the system of the present invention is configured to perform one or more image transformations of the raw image data obtained from the imaging sensor, and enhance this to result in an output which is more easily interpreted, e.g. by an operator of the agricultural machine.

A filter may be applied to the image data obtained by the imaging sensor. The one or more controllers may be configured to receive filtered image data. For example, the imaging sensor may be configured to apply a Bayer filter to the image data.

The one or more controllers may be configured to apply a colour transformation to the received image data. For example, the one or more controllers may be configured to convert the received image data to RGB data. The one or more controllers may be configured to convert the received image data to RGB data using a Malvar Cutler method.

The one or more controllers may be configured to apply a corrective transformation to the image data. For example, in some embodiments the one or more controllers may be configured to apply a Vignette Correction transformation to the image data.

The one or more controllers may be configured to apply a distortion correction transformation to the image data. This may include applying a delta angle correction to the image data. This may include application a barrel distortion correction to the image data. This may include using a barrel or lens distortion model, such as an equidistant distortion model.

The RGB data may be converted to a different colour space. This may include converting the RGB data to a LAB colour space. This may include converting the RGB data to a CIELAB colour space.

The one or more controllers may be configured to remap a tonality of the image data. This may include applying a curve to the image data. This may include applying an S-curve to the image data. The may include applying a curve to the "L-channel" or "luminance-channel" of the image data after conversion to the LAB or CIELAB colour space. Advantageously, this may result in the residue material being more clearly defined with respect to the background in the image data. The remapped image data may comprise the enhanced image for display.

The one or more controllers may be configured to apply a haze removal transformation to the image data. Advantageously, this may filter out dust and other small particles present within the image data which may otherwise obscure the residue material pieces.

The one or more controller may be operable to employ a data buffer of a predetermined time period for the data received from the sensor. The time period for the data buffer may be determined by a number of scans of the sensor across the sensing region. For example, the data buffer may correspond to a sequence of no more than 10, or at least 10, or at least 50, or at least 100, or at least 200 scans of the sensing region by the sensor, for example, providing up to a corresponding number of sequential "images" or datasets of the environment covered by the sensing region. As will be appreciated, image objects and in particular individual residue material pieces will move between scans of the sensor, and as such the data buffer will include multiple positions for each residue piece over the time period covered by the data buffer, up to the number scans making up the data buffer. As described herein, the one or more controllers are configured to determine the distribution of material from the data buffer and whilst having multiple data points for each residue piece may reduce resolution in terms of identifying individual pieces, this arrangement instead provides a clearer understanding of the overall shape and uniformity of the spread pattern provided by the spreader tool.

The time period may, in some embodiments, be user selectable. For example, in use an operator of the agricultural machine may be able to select a time period for the buffer in order to try and optimise or at least improve any obtained visualisation of the residue spread. The time period may be no more than 1 second, or may be at least 1 second, or at least 2 seconds, or at least 5 seconds, or at least 10 seconds, for example.

In embodiments, the time period may be dependent on a speed of the agricultural machine.

The one or more controllers may be configured to extract a value for each corresponding pixel in each of the stored images forming the data buffer. For example, the one or more controllers may be configured to extract a statistical value for each pixel (e.g. an average RGB value, an average L value where the data is converted into a LAB/CIELAB colour space, etc.). The one or more controllers may be configured to extract a quartile value for each pixel based on the stored data in the data buffer. This may be a first or third quartile, for example. The statistical values determined from the data buffer may be used to generate the enhanced image for display.

The one or more controllers may be configured to apply a colour transformation to the processed image data to generate the enhanced image for display. The colour transformation may include converting the processed image data to a different colour space. The colour transformation may include converting the processed image data to a "false" or "pseudo" colour space. The colour transformation may include converting the processed image data to a jet or turbo colour space. Advantageously, this may result in the residue material being more clearly defined with respect to the background in the displayed image.

The one or more controllers may be configured to apply a frequency filter to the image data. The frequency filter may be dependent on an operational speed of the agricultural machine and/or one or more operable components of the agricultural machine. The frequency filter may be dependent on a forward speed of the agricultural machine. Advantageously, the present invention may utilise the forward speed of the machine, and hence relative speed of non-residue "stationary" objects within the vehicle's environment, to filter such objects from the image data to be analysed / presented to the operator, leaving substantially only the residue material ejected by the spreader tool in the processed image data.

The imaging sensor preferably comprises a camera. The imaging sensor may be mounted or otherwise coupled to the rear of the agricultural machine. In embodiments, the imaging sensor is mounted or otherwise coupled to an unloading auger of the agricultural machine, and provides a generally "top-down" view of the environment rear of the agricultural machine, in use. The imaging sensor may incorporate a lens providing an equidistance projection. In some embodiments the lens may instead provide a perspective projection.

The user interface may comprise a display means. The display means may be provided as part of the agricultural machine, for example as a part of a user terminal within an operator cab of the machine. In some embodiments the user interface may comprise an interface on a portable device, for example on a smartphone, tablet, computer, etc. which may be used remotely from the machine itself.

The system may further be configured to provide an indicator on the enhanced image of a maximum extent at which material is positioned, e.g. a distance from the location of the spreader tool. This may include a line or the like overlaid on the image at a position corresponding to the maximum lateral extent at which the material is ejected from the spreader tool on the left and/or right hand side of the machine.

According to an aspect of the invention there is provided a control system for monitoring the distribution of residue material from a spreader tool of an agricultural machine, the control system comprising one or more controllers, and being configured to: receive image data from an imaging sensor indicative of residue material spread by the spreader tool within a sensing region rearwards of the agricultural machine; apply one or more image transformations to the image data to generate an enhanced image of the residue material distribution; and output one or more control signals for a user interface associated with the agricultural machine for providing an indicator indicative of the enhanced image.

The one or more controllers may collectively comprise an input (e.g. an electronic input) for receiving one or more input signals indicative of the image data from the imaging sensor. The one or more controllers may collectively comprise one or more processors (e.g. electronic processors) operable to execute computer readable instructions for controlling operation of the control system, for example to apply the one or more image transformations to the image data. The one or more processors may be operable to generate one or more control signals for controlling the user interface. The one or more controllers may collectively comprise an output (e.g. an electronic output) for outputting the one or more control signals.

The one or more controllers of the control system may be configured in any manner of the one or more controllers of the system described hereinabove with reference to the first aspect of the invention.

According to another aspect of the invention there is provided an agricultural machine comprising the system or control system of any preceding aspect.

Optionally, the agricultural machine may comprise a harvesting vehicle, such as a combine harvester, for example.

In a further aspect of the invention there is provided a method for monitoring the distribution of residue material from a spreader tool of an agricultural machine, the method comprising: receiving image data from an imaging sensor indicative of residue material spread by the spreader tool within a sensing region rearwards of the agricultural machine; applying one or more image transformations to the image data to generate an enhanced image of the residue material distribution; and controlling a user interface associated with the agricultural machine for providing an indicator indicative of the enhanced image.

A filter may be applied to the image data obtained by the imaging sensor. The method may comprise applying a Bayer filter to the image data.

The method may comprise applying a colour transformation to the received image data. For example, the method may comprise converting the received image data to RGB data. The method may comprise converting the received image data to RGB data using a Malvar Cutler method.

The method may comprise applying a corrective transformation to the image data. For example, in some embodiments the method may comprise applying a Vignette Correction transformation to the image data.

The method may comprise applying a distortion correction transformation to the image data. This may include applying a delta angle correction to the image data. This may include application a barrel distortion correction to the image data. This may include using a barrel or lens distortion model, such as an equidistant distortion model.

The RGB data may be converted to a different colour space. This may include converting the RGB data to a LAB colour space. This may include converting the RGB data to a CIELAB colour space.

The method may comprise remapping a tonality of the image data. This may include applying a curve to the image data. This may include applying an S-curve to the image data. The may include applying a curve to the "L-channel" or "luminance-channel" of the image data after conversion to the LAB or CIELAB colour space. Advantageously, this may result in the residue material being more clearly defined with respect to the background in the image data. The remapped image data may comprise the enhanced image for display.

The method may comprise applying a haze removal transformation to the image data. Advantageously, this may filter out dust and other small particles present within the image data which may otherwise obscure the residue material pieces.

The method may comprise employing a data buffer of a predetermined time period for the data received from the sensor. The time period for the data buffer may be determined by a number of scans of the sensor across the sensing region. For example, the data buffer may correspond to a sequence of no more than 10, or at least 10, or at least 50, or at least 100, or at least 200 scans of the sensing region by the sensor, for example, providing up to a corresponding number of sequential "images" or datasets of the environment covered by the sensing region. As will be appreciated, image objects and in particular individual residue material pieces will move between scans of the sensor, and as such the data buffer will include multiple positions for each residue piece over the time period covered by the data buffer, up to the number scans making up the data buffer. As described herein, the method may comprise determining the distribution of material from the data buffer and whilst having multiple data points for each residue piece may reduce resolution in terms of identifying individual pieces, this arrangement instead provides a clearer understanding of the overall shape and uniformity of the spread pattern provided by the spreader tool.

The time period may, in some embodiments, be user selectable. For example, in use an operator of the agricultural machine may be able to select a time period for the buffer in order to try and optimise or at least improve any obtained visualisation of the residue spread. The time period may be no more than 1 second, or may be at least 1 second, or at least 2 seconds, or at least 5 seconds, or at least 10 seconds, for example.

The time period may be dependent on a speed of the agricultural machine.

The method may comprise extracting a value for each corresponding pixel in each of the stored images forming the data buffer. For example, the method may comprise extracting a statistical value for each pixel (e.g. an average RGB value, an average L value where the data is converted into a LAB/CIELAB colour space, etc.). The method may comprise extracting a quartile value for each pixel based on the stored data in the data buffer. This may be a first or third quartile, for example. The statistical values determined from the data buffer may be used to generate the enhanced image for display.

The method may comprise applying a colour transformation to the processed image data to generate the enhanced image for display. The colour transformation may include converting the processing image data to a different colour space. The colour transformation may include converting the processed image data to a "false" or "pseudo" colour space. The colour transformation may include converting the processed image data to a jet or turbo colour space. Advantageously, this may result in the residue material being more clearly defined with respect to the background in the displayed image.

The method may comprise applying a frequency filter to the image data. The frequency filter may be dependent on an operational speed of the agricultural machine and/or one or more operable components of the agricultural machine. The frequency filter may be dependent on a forward speed of the agricultural machine. Advantageously, the present invention may utilise the forward speed of the machine, and hence relative speed of non-residue "stationary" objects within the vehicle's environment, to filter such objects from the image data to be analysed / presented to the operator, leaving substantially only the residue material ejected by the spreader tool in the processed image data.

The user interface may comprise a display means. The display means may be provided as part of the agricultural machine, for example as a part of a user terminal within an operator cab of the machine. In some embodiments the user interface may comprise an interface on a portable device, for example on a smartphone, tablet, computer, etc. which may be used remotely from the machine itself.

The method may comprise providing an indicator on the enhanced image of a maximum extent at which material is positioned, e.g. a distance from the location of the spreader tool. This may include a line or the like overlaid on the image at a position corresponding to the maximum lateral extent at which the material is ejected from the spreader tool on the left and/or right hand side of the machine.

In a further aspect of the invention there is provided computer software comprising computer readable instructions which, when executed by one or more processors, causes performance of the method of the preceding aspect of the invention.

A further aspect of the invention provides a computer readable storage medium comprising the computer software of the preceding aspect of the invention. Optionally, the storage medium comprises a non-transitory computer readable storage medium.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention will now be described, by way of example only, with reference to the accompanying drawings, in which:
- Figure 1: is a schematic side cross-sectional view of an agricultural harvester embodying aspects of the invention;
- Figure 2: is a schematic view of an embodiment of a control system of the invention; and
- Figures 3-6: are representative images illustrating aspects of the invention.

### DETAILED DESCRIPTION

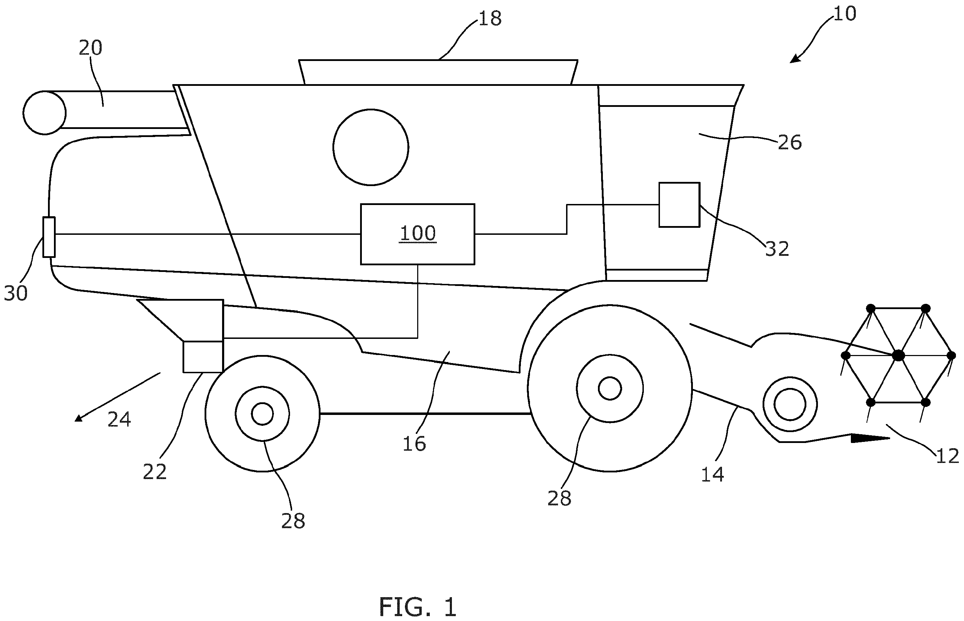

Figure 1 illustrates an agricultural machine, and specifically a combine 10, embodying aspects of the present invention.

The combine 10 is coupled to a header 12 which is operable, in use, to cut and gather a strip of crop material as the combine 10 is driven across a field / area to be harvested during a harvesting operation. A conveyor section 14 conveys the cut crop material from the header 12 into a crop processing apparatus 16 operable to separate grain and non-grain (i.e. material other than grain (MOG) or residue material (used interchangeably herein)) as will be appreciated. It is noted here that apparatus for separating grain and non-grain material are well-known in the art and the present invention is not limited in this sense. The skilled person will appreciate that numerous different configurations for the crop processing apparatus may be used as appropriate. Clean grain separated from the cut crop material is collected in a grain bin 18, which may be periodically emptied, e.g. into a collection vehicle, storage container, etc. utilising unloading auger 20. The remaining non-grain material (MOG) / residue material is separately moved to a spreader tool 22 which is operable in use to eject the non-grain material or MOG from the rear of the combine 10 and onto the ground. In Figure 1, this is represented by arrow 24 which illustrates the MOG being ejected rearwards from the combine 10. It will be appreciated that in some embodiments the combine 10 may also include a chopper tool positioned, for example, between the crop processing apparatus 16 and the spreader tool 22 and operable, in use, to cut the residue material before it is spread by the spreader tool 22.

The combine 10 also typically includes, amongst other features, an operator cab 26, wheels 28, engine (not shown) and a user interface 32.

As will be discussed in detail herein, the combine 10 additionally includes a sensor in the form of a camera 30. The camera 30 is used, by a control system 100 of the combine, to obtain image data of a sensing or measurement region rear of the combine 10, indicative of a distribution of residue material associated with the spreader tool 22. In the illustrated embodiment, the camera 30 is shown mounted to a rear surface of the combine 10, and is angled downwards providing a field of view which encompasses a ground surface rear of the combine 10.

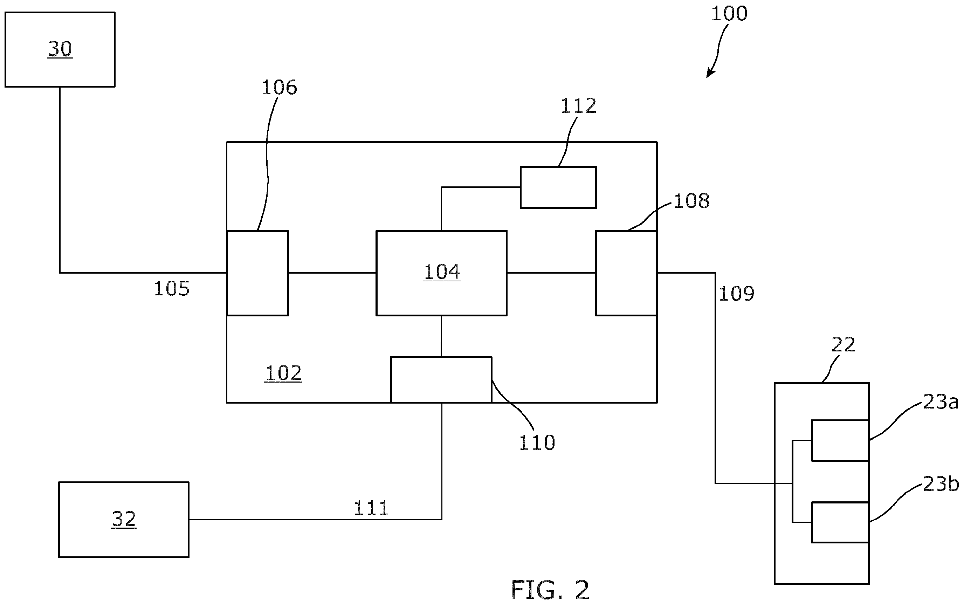

Figure 2 illustrates control system 100 further. As shown, control system 100 comprises a controller 102 having an electronic processor 104, an electronic input 106 and electronic outputs 108, 110. The processor 104 is operable to access a memory 112 of the controller 102 and execute instructions stored therein to perform the steps and functionality of the present invention discussed herein, e.g. by controlling the user interface 32, for example to provide an image to an operator of the combine 10 illustrative of the observed residue material distribution.

The processor 104 is operable to receive image data via input 106 which, in the illustrated embodiment, takes the form of input signals 105 received from the camera 30. As described in detail herein, the camera 30 has a sensing region rearward of the combine 10, with the image data received from the camera 30 being illustrative of residue material within the sensing region. Using the received image data, the processor 104 is operable to perform one or more image processing transformations on the image data to generate an enhanced image for display by the user interface 32 in the manner described herein. Advantageously, the process steps discussed herein may result in the generation of an enhanced image which more clearly illustrates the residue spread associated with the spreader tool 22 for understanding by an operator of the combine 10.

In the illustrated embodiment of Figure 2, output 110 is operably coupled to the user interface 32 of the combine 10. Here, the control system 100 is operable to control operation of the user interface 32, e.g. through output of control signals 111 in order to display the enhanced image generated as described herein. In addition, the control system 100 may be operable to control the user interface 32 to display to the operator a graphical representation of the residue material distribution from the spreader tool 22 as determined by processor 104, image data obtained from the camera 10 (e.g. a direct image feed from the camera 10) on the combine 10, or other useful information. The user interface 32 may also be operable to receive a user input from the operator, and in such instances the output 110 may act as an input for receiving that user input at the processor 104. The user input may relate to a requested or desired distribution of residue material, for example, made by the operator of the combine 10, or may relate to a preferred selection of image type illustrating the residue spread. For instance, certain operators of the combine may prefer different level of processing on the raw image data from the camera 10 to enable them to visualise the observed spread pattern.

It will be appreciated that in alternative arrangements a user interface may instead be provided remote from the combine 10, e.g. as part of a smartphone, tablet computer or computer, for example, for a remote operator to visualise the spread pattern.

In a variant, as illustrated by Figures 1 and 2, the processor 104 is further operable to generate and output control signals 109 via the output 108 for controlling operation of the spreader tool 22, and more specifically first and second steering units of the spreader tool 22, here in the form of a first rotor 23a and a second rotor 23b, for controlling the distribution of residue material ejected from the spreader tool 22. This may be performed upon receipt of instructions by an operator of the combine 10, e.g. upon reviewing the enhanced image presented on user interface 32.

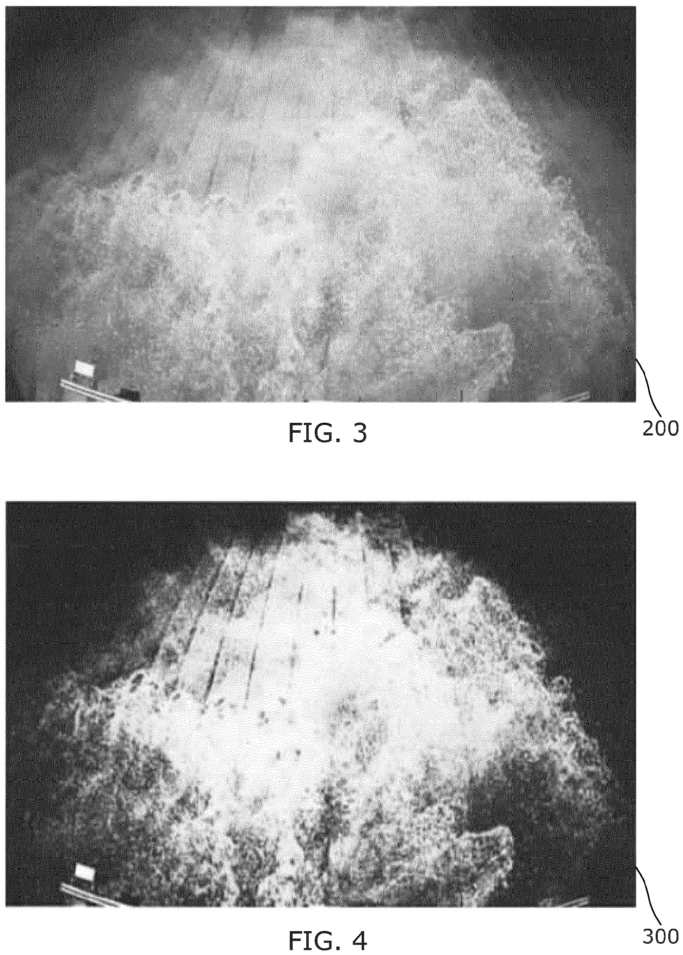

Figures 3 to 6 illustrate the operational use of aspects of the invention.

As discussed herein, aspects of the invention relate to the performance of one or more image transformations to the image data received from the camera 30 in order to generate an enhanced image for an operator of the combine 10. Figure 3 illustrates an image 200 formed from raw image data from the camera 30, following a number of pre-processing transformations (discussed below). Figures 4 to 6 are representative images obtained following one or more further transformations applied to the image data forming image 200 of Figure 3.

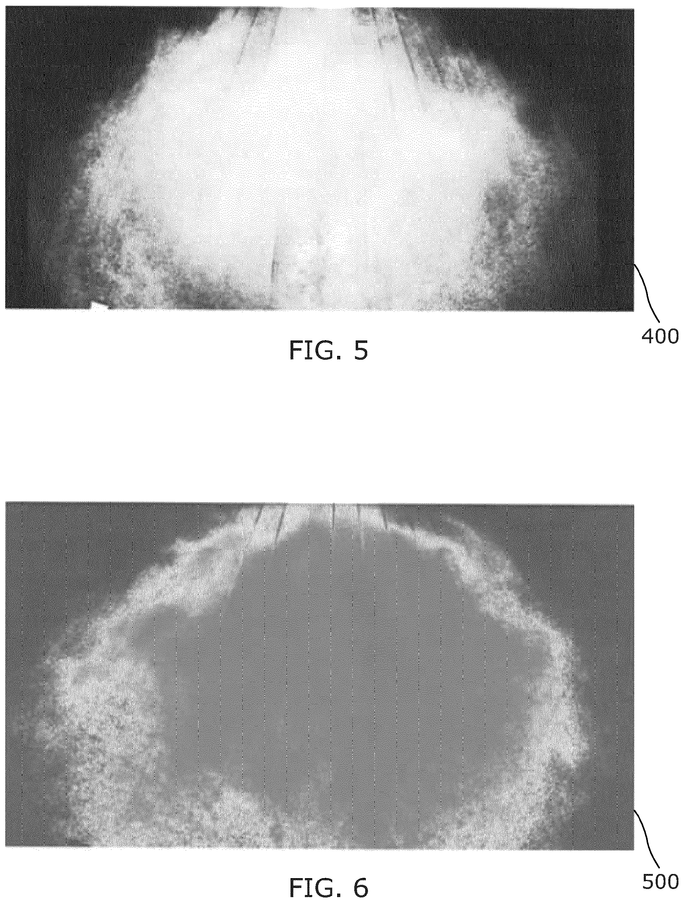

The following description covers an embodiment of a series of processing steps performed on the image data received from camera 30 to obtain an enhanced image 500 (Figure 6) for display to an operator of the combine 10. However, it will be appreciated that each of the processes discussed hereinbelow may be performed as part of the combined process, or be performed independently where appropriate/possible, with an enhanced image output possible at each stage identified below.

As discussed above, Figure 3 illustrates an image associated with the raw image data received from the camera 30, but following a number of pre-processing transformations applied thereto. These include, a Bayer filter is applied to the image data from the camera 10, and following this a first colour transformation is applied. Here, this comprises a conversion of the received image data to RGB data using a Malvar Cutler method. One or more corrective transformations are then applied, here including a vignette correction transformation and a distortion correction transformation, including applying a delta angle correction and/or a barrel correction and/or other lens distortion correction to the image data.

As a next step, the corrected RGB data is converted to a different colour space. Specifically, in the illustrated embodiment, this includes converting the RGB data to a LAB colour space before remapping a tonality of the converted LAB image data. Here, this comprises applying an S-curve to the converted image data, and specifically to the "L-channel" or "luminance-channel" of the LAB image data. Advantageously, this results in the residue material being more clearly defined with respect to the background in the image data by effectively enhancing any "luminous" pixels corresponding to the pixel values associated with residue material whilst subduing pixels corresponding to background. At this stage, the remapped image data may be used to generate an enhanced image for display. An example enhanced image 300 is shown in Figure 4. As shown, image 300 in Figure 4 more clearly illustrates the residue material spread when compared with image 200 of Figure 3, where the residue is relatively difficult to distinguish from the background.

In a variant, a haze removal transformation may be applied to the image data. Advantageously, this may filter out dust and other small particles present within the image data which may otherwise obscure the residue material pieces, and suppress stray background light in the image.

In a next step, a data buffer is employed storing data from a number of sequential images obtained by the camera 10. This is typically of the order of 10-100 separate images. For equivalent pixels of each image, a value is extracted which corresponds to a statistical "value" for that pixel across the multiple images. The statistical values are used to generate an enhanced image comprising the processed pixels - see Figure 5. Whilst having multiple data points for each residue piece reduces resolution in terms of identifying individual pieces, this instead provides a clearer representation of the overall shape and uniformity of the spread pattern provided by the spreader tool. In this embodiment, the pixel values correspond to the L-channel values of the corrected LAB image data determined above - i.e. the image data used to generate image 300 of Figure 4. However, it will be appreciated that the data buffer may be utilised for the raw image data from camera 30, or indeed following one or more of the processing steps described herein. Again, image 400 of Figure 5 may be output to user interface 32 for display, and more clearly illustrates the shape (in particular) of the residue material spread when compared with image 200 of Figure 3, and indeed image 300 of Figure 4.

In a final step of the process, a further colour transformation in applied to the processed image data. The further colour transformation here includes converting the processing image data to a false/pseudo colour space, and in particular to a jet colour space. An example image 500 obtained following the further colour transformation is shown in Figure 6. Here, the residue material is more clearly defined with respect to the background in the displayed image, and the operator of the combine 10 can immediately assess the shape and extent of the material spread when compared with the background given the stark colour contrast in the image 500.

In an extension of the method, a frequency filter may be applied to the image data. This may be applied at any point in the above described method. The frequency filter may advantageously be dependent on a forward speed of the agricultural machine to filter from the image data non-residue "stationary" objects within the vehicle's environment.

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

It will be appreciated that the above embodiments are discussed by way of example only. Various changes and modifications can be made without departing from the scope of the present application.

## Claims

1. A system for monitoring the distribution of residue material from a spreader tool of an agricultural machine, the system comprising:
an imaging sensor having a sensing region rearwards of the agricultural machine; and
one or more controllers, configured to:
receive image data from the sensor indicative of residue material spread by the spreader tool within the sensing region;
apply one or more image transformations to the image data to generate an enhanced image of the residue material distribution; and
output one or more control signals for a user interface associated with the agricultural machine for providing an indicator indicative of the enhanced image.

2. A system as claimed in claim 1, wherein the imaging sensor is configured to apply a Bayer filter to the image data.

3. A system as claimed in claim 1 or claim 2, wherein the one or more controllers are configured to apply a colour transformation to the received image data.

4. A system as claimed in claim 3, wherein the one or more controllers are configured to convert the received image data to RGB data using a Malvar Cutler method.

5. A system as claimed in any preceding claim, wherein the one or more controllers are configured to apply a corrective transformation to the image data;
optionally wherein the one or more controllers are configured to apply a Vignette Correction transformation to the image data.

6. A system as claimed in any preceding claim, wherein the one or more controllers are configured to apply a distortion correction transformation to the image data;
optionally wherein the one or more controllers are configured to apply:
a delta angle correction to the image data;
a barrel distortion correction to the image data; and/or
a lens distortion correction to the image data.

7. A system as claimed in claim 4, or any claim dependent thereon, wherein the one or more controllers are operable to convert the RGB data to a different colour space;
optionally wherein the one or more controllers are configured to convert the RGB data to:
a LAB colour space; or
a CIELAB colour space.

8. A system as claimed in any preceding claim, wherein the one or more controllers are configured to remap a tonality of the image data;
optionally wherein the one or more controllers are configured to apply an S-curve to the image data.

9. A system as claimed in claim 8, when dependent on claim 7, wherein the one or more controllers are configured to apply a curve to the "L-channel" or "luminance-channel" of the image data after conversion to the LAB or CIELAB colour space.

10. A system as claimed in any preceding claim, wherein the one or more controllers are configured to apply a haze removal transformation to the image data.

11. A system as claimed in any preceding claim, wherein the one or more controllers are configured to apply a colour transformation to the processed image data to generate the enhanced image for display; optionally wherein the colour transformation includes converting the processing image data to a jet or turbo colour space.

12. A system as claimed in any preceding claim, wherein the one or more controllers are configured to apply a frequency filter to the image data, the frequency filter being dependent on a forward speed of the agricultural machine.

13. A system as claimed in any preceding claim, configured to provide an indicator on the enhanced image comprising a line or the like overlaid on the image at a position corresponding to the maximum lateral extent at which the material is ejected from the spreader tool.

14. An agricultural machine comprising the system of any preceding claim.

15. A method for monitoring the distribution of residue material from a spreader tool of an agricultural machine, the method comprising:
receiving image data from an imaging sensor indicative of residue material spread by the spreader tool within a sensing region rearwards of the agricultural machine;
applying one or more image transformations to the image data to generate an enhanced image of the residue material distribution; and
controlling a user interface associated with the agricultural machine for providing an indicator indicative of the enhanced image.
